# EUROPEAN PATENT SPECIFICATION

(11) **EP 4 633 995 B1**
(45) Date of publication and mention of the grant of the patent: **01.04.2026**
(21) Application number: 23833068.2
(22) Date of filing: 14.12.2023
(51) Int. Cl.: B60L 53/14, B60L 53/12, B60L 55/00, B60L 53/10, B60L 53/22, H02M 3/02, H02M 7/66, H02M 3/335, H02M 3/00, H02M 1/12, H02M 1/42

(54) **ONBOARD CHARGER FOR ELECTRIC VEHICLES**
BORDLADEEINRICHTUNG FÜR ELEKTROFAHRZEUGE
CHARGEUR EMBARQUÉ POUR VÉHICULES ÉLECTRIQUES

(30) Priority: 14.12.2022 EP 22213637; 17.03.2023 GB 202303947; 26.05.2023 GB 202307946; 08.11.2023 GB 202317137
(43) Date of publication of application: 22.10.2025
(73) Proprietor: Capactech Limited, Kingston-upon-Thames, Surrey KT1 3GZ (GB)
(72) Inventor: VARGAS-REIGHLEY, Dorian, Kingston Upon Thames Surrey KT1 3GZ (GB)
(74) Representative: Schlich
(86) International application number: PCT/EP2023/085967
(87) International publication number: WO 2024/126756

(56) References cited:
- EP-B1- 3 694 079
- CN-A- 112 297 890
- DE-A1- 102011 083 020
- DE-A1- 102014 217 703
- DE-A1- 102017 221 365
- US-A1- 2014 062 394
- US-A1- 2020 313 441
- YUAN JIAQI ET AL: "A Review of Bidirectional On-Board Chargers for Electric Vehicles", IEEE ACCESS, IEEE, USA, vol. 9, 29 March 2021 (2021-03-29), pages 51501 - 51518, XP011848400, DOI: 10.1109/ACCESS.2021.3069448

## Description

### Introduction

The present invention relates to methods of charging and/or discharging a battery, e.g. via a battery management system (BMS) in an electric vehicle (EV). In particular, the invention relates to electric vehicle(s) which have the ability, or capacity, to discharge their battery externally to the vehicle and, therefore, suitably return or supply charge (or power or electricity; these terms are used interchangeably) to a power supply (such as the grid) or to a dwelling (such as a residential building or house, block of flats or apartments), or a working building or facility (such as an office). The invention relates in particular to onboard chargers for electric vehicles.

### Background of the Invention

Wireless Power Transfer, achieved using induction between resonant coils, has been extant since the late 19^{th} century (famously demonstrated by Nikola Tesla circa 1890). Using inductive wireless power transfer to charge electric vehicles has been a developed technology since the early 2000s (circa 2007). As an industry, wireless charging of EVs is nascent but is growing in usability and appeal to both EV users and EV Original Equipment Manufacturers (OEMs). The essential architecture of these inductive wireless EV charging systems has always been the same, regardless of solutions developed and state of technology, due to inherent limitations in efficiency of transferring high frequency power over distances longer than several metres.

The invention can involve a significant alteration to this architecture, which has been enabled by the efficient high frequency power transfer capabilities of capacitive cables, the development of interoperable EV charging communication standards capable of supporting bidirectional WPT, such as ISO 15118-20 and OCPP 2.0.1, and the continued advancement of onboard charger (OBC) technology and the standardisation of OBCs within all mid/large size EVs.

Electric vehicles are usually charged from the grid or a central power supply. Such vehicles usually contain an onboard charger (OBC) which is connected to the battery (or BMS). The power supply is usually alternating current (AC) but a car's battery, and most of its internal electrics and electronics, usually work on direct current (DC). Most car batteries thus output direct current (DC).

Thus, electric vehicles typically have a rectifier, which is unidirectional, to convert the incoming/input AC to DC, in order to charge the battery with DC.

In prior art plug-in electric vehicle charging applications, a plug-in charger is manually connected to the electric vehicle's onboard charger (OBC) and supplies power to the OBC from the grid, typically in the form of alternating current (AC) at a frequency of about 50 Hz or about 60 Hz. The OBC has a rectifier functionality which then converts this input AC to DC, which is then supplied to the battery management system (BMS) of the electric vehicle and used to charge the battery.

In prior art wireless electric vehicle charging applications, power is supplied wirelessly to the electric vehicle's car pad, which receives AC power input at a high frequency, typically about 70-95 kHz (normally about 80-85 kHz, and especially about 85 kHz). This AC is then supplied to a rectifier, which rectifies the AC to DC and then supplies this DC to the battery management system (BMS) of the electric vehicle, which uses the DC to charge the battery. A separate rectifier component is included as conventional OBCs are adapted to receive alternating current at a frequency of about 50 Hz or about 60 Hz and not at a high frequency.

Accordingly, for electric vehicles adapted for charging via both plug-in charging and wireless charging, both an OBC and a separate rectifier have to be provided in the electric vehicle. This is disadvantageous because the cost of manufacturing the electric vehicle is high and weight of the electric vehicle is high (both due to the relatively high number of components needed).

In general, wireless systems are, in theory, preferred as they do not have the disadvantage of needing to be plugged-in to a charging system, but these systems and vehicles do not allow for discharge of the battery outside the vehicle.

Known electric vehicles and charging systems therefor are described in, for example, EP 3974238, WO 2021/033131, US 11,427,101, WO 2019/122890, US 10,427,532, and US 2021/0136842.

CN 112 297 890 A discloses an onboard charger (OBC) for an electric vehicle, wherein the onboard charger is configured to receive from the grid and externally output to the grid all of:(a) an alternating current at a low frequency of 50 Hz - 60 Hz, through a low frequency AC interface in a low frequency alternating current mode;(b) an alternating current at a high frequency, through a high frequency AC interface in a high frequency alternating current mode; the OBC further configured to receive from the grid a direct current through a DC interface in a direct current mode. DE 10 2011 083020 A1 discloses an onboard charger for an electric vehicle, wherein the onboard charger is configured to receive from the grid ( the grid all of: (a) an alternating current at a low frequency of 50 Hz - 60 Hz , through a low frequency AC interface in a low frequency alternating current mode; (b) an alternating current at a high frequency through a high frequency AC interface in a high frequency alternating current mode, and (c) direct current through a DC interface (20; §46) in a direct current mode, wherein the OBC comprises three sets of switches.

It is therefore desirable to provide an improved or alternative electric vehicle.

An aim of the invention is to provide alternative and preferably improved electric vehicles and charging systems therefor that address one or more of the issues identified above.

### Summary of the Invention

The invention is defined in the appended claims.

An onboard charger (OBC) for an electric vehicle is hereby provided, wherein the onboard charger is configured to receive:
(a) an input alternating current at a low frequency,
(b) an input alternating current at a high frequency, and
(c) an input direct current.

As set out in examples below, the OBC is suitably configured to output direct current for charging of a battery of an electric vehicle. The OBC operates bidirectionally (as described in more detail herein).

An electric vehicle (EV) is provided that comprises the OBC, as is a system for charging and/or discharging an EV comprising a power supply for charging the battery (or battery management system, BMS), wherein the EV comprises the OBC and is configured to discharge power from its battery externally. Similarly, a method of adapting an EV to discharge AC externally comprises fitting the EV with the OBC.

### Detailed Description of the Invention

According to a first aspect of the invention, there is thus provided an onboard charger for an electric vehicle, wherein the onboard charger is configured to receive:
(a) an input alternating current at a low frequency,
(b) an input alternating current at a high frequency, and
(c) an input direct current.

The onboard charger (OBC) of embodiments of the disclosure is configured to output direct current for charging of a battery of the electric vehicle. The OBC is bidirectional Thus, an electric (motor) vehicle (EV) of the invention may comprise a means to charge and/or discharge power (or electricity) between the battery (e.g. via the BMS), and a power supply (such as the grid) or a desired location, such as a dwelling (e.g. a residential dwelling or a workplace).

An OBC of the invention suitably has three interfaces, these being a low frequency alternating current (AC) interface, a high frequency alternating current (AC) interface, and a direct current (DC) interface. The interfaces enable input of power of varying sources to the OBC and, when bidirectional, output of power from the OBC.

Also provided is an electric vehicle comprising an OBC of the invention.

The electric vehicle (EV) may have one or more bidirectional connections in order to effect such a bidirectional flow of electricity (or power). The EV may thus have the ability to discharge DC from the battery (usually via AC) externally, such as to a power supply or dwelling. This may involve the battery discharging DC to an OBC having an inverter functionality, which then inverts the DC to AC at a low frequency (of about 50 Hz or about 60 Hz) and optionally outputs the AC to a converter, which converts the low frequency AC to AC at a high frequency (of about 70-95 kHz, normally about 80-85 kHz and preferably about 85 kHz). The converter can then supply high frequency AC to the car pad; the car pad can then wirelessly transmit power to a receiver not forming part of the electric vehicle, i.e. external to the electric vehicle, such as a ground pad of a wireless electric vehicle charging system. Preferably, the OBC also has inverter functionality to invert the DC to AC at a high frequency; again, this can be wirelessly transmitted e.g. via the car pad.

The EV can therefore be capable of allowing a bidirectional flow of power (or electricity) between an external point and the battery. This may comprise one or more bidirectional connections. For example, there may be a bidirectional connection between an alternating current (AC) frequency converter and an onboard charger (OBC). The EV may comprise an (AC) frequency converter (FC). This FC may be capable of converting AC from one (e.g. higher) frequency to another (e.g. lower) frequency (of AC), such as from a high frequency to a low frequency, for example in the range from 70 or 80 kHz to 90 or 95 kHz (especially 85 kHz) to a lower frequency such as in the range approximately 50-60 Hz (especially 50 Hz and 60 Hz). The FC may also be capable of converting AC from a low(er) frequency to a high(er) frequency, for example from 50-60 Hz (especially 50 Hz and 60 Hz) to 70/80 to 90/95 kHz (especially 85 kHz). The EV may comprise, an (e.g. AC) frequency converter (FC) capable of converting single phase AC to 3-phase AC, optionally via DC, or *vice versa.* There may also be a bidirectional connection between the OBC and the battery (or BMS), as well as a bidirectional connection between the car pad and the AC frequency converter and a bidirectional connection between the frequency converter and the OBC.

An OBC of preferred embodiments is itself configured to output (a) an alternating current at a low frequency, (b) an alternating current at a high frequency, and/or (c) a direct current. In particular, the OBC may be configured to output all of (a) an alternating current at a low frequency, (b) an alternating current at a high frequency, and (c) a direct current. Hence, direct current discharged from the battery can be output by the OBC in each of these three formats.

As will be appreciated, the EV does not need, and thus may not contain or comprise, a rectifier separate from the OBC. Such components usually provide unidirectional flow of power (or electricity). However, the EV of the invention can provide for bidirectional flow of power.

In the EV of the invention, a frequency converter may be provided to change the frequency of the AC supplied to it. The (thus changed frequency) AC can then be supplied to the OBC. In embodiments, the converter changes (or converts) the frequency of the AC supplied to it by reducing the frequency, such as from a frequency in the kHz range to a frequency in the Hz range. In more preferred embodiments, the converter changes the frequency from high to low, e.g. from 70/80-90/95 kHz to 50-60 Hz. In even more preferred embodiments, the converter changes the frequency from 85 kHz to either 50 Hz or 60 Hz. In preferred embodiments, the OBC itself comprises a rectifier, or a rectifier component, and it is this rectifier capability that can convert AC to DC (and thus supply the thus converted DC to the battery, e.g. via the BMS). In such EVs, there is therefore no need to provide a rectifier separate from the OBC. Suitably, there is a bidirectional connection between the frequency converter and the OBC and/or a bidirectional connection between the OBC and the BMS. Suitably, the OBC bidirectional connections comply with ISO 15118-20.

When referring to an EV, it is meant a road (or off-road) vehicle which is powered (or motion provided) substantially or mainly by electricity and/or a battery, rather than an internal combustion engine. Preferred vehicles are powered only by electricity. The EV may, however, also be a so-called "hybrid vehicle", meaning power may be provided by either an internal combustion engine or a battery, or a combination of both. The EV preferably has one or more electric motor(s) which can, or are adapted to, power or drive one or more (road) wheels of the vehicle. However, hybrid vehicles are contemplated which comprise not only an electric motor capable of driving one or more wheel(s) but also, and in addition, an internal combustion (IC) engine. The IC engine may be powered by liquid or fossil fuel such as petrol or diesel, or liquid petroleum gas (LPG) or hydrogen (H₂).

The invention enables electric vehicles to be manufactured at a reduced cost and with fewer component parts (and thus having reduced overall weight) compared to prior art electric vehicles, whilst retaining the advantages of bidirectionality seen in prior art systems.

An additional aspect of the invention relates to a method of controlling or regulating the charging and/or discharging of an EV (of the invention) or controlling the system (of the invention). The method can comprise allowing or causing power to flow or be outputted from the battery (of the EV) to the power supply (such as the grid) or to a (human) dwelling (e.g. a residential dwelling or a workplace). The method can comprise a bidirectional flow of electricity/power; for example, the ability of the EV to discharge its battery externally (and so outside the EV). The method may comprise wireless control. It may additionally comprise measuring and/or monitoring various (useful) parameters including, for example, the level of charge in the battery and/or flow rate of power to/from the battery or EV.

The method may comprise controlling one or more (such as multiple) vehicles. In such methods, the controlled system is said to be a "multiplexed" system. The method may comprise identifying one or more vehicles and/or regulating charging and/or discharging of one or more vehicle(s).

The method may involve controlling one or more of the electrical and/or electronic components of the EV, such as the frequency converter, the OBC, and/or the BMS of the vehicle.

The method may thus involve managing or controlling a fleet of vehicles, for example charging and/or discharging a particular vehicle (or vehicles) as and when required, or as desired, for example when electricity is cheapest.

In the invention, the electric vehicle can be charged wirelessly using magnetic field wireless power transfer ("MF WPT").

As used herein, the term "central assembly" is used to refer to the power supply in combination with the converter. As used herein, the term "ground assembly" is used to describe the one or more ground pads connected to the converter.

An example of a central and ground assembly combination suitable for supplying power to a plurality of ground pads, such as in the invention, is described in, for example, PCT/EP2022/065760 (published as WO 2022/258782). It will be appreciated that the "wireless charging stations" referred to in that document are equivalent to the "ground pads" of the present invention. AC at a frequency of 70-95 kHz can be supplied from the car pad directly to the OBC of the invention.

A 50 Hz AC output is preferred in countries where 50 Hz has been approved for domestic power supplies. An example of such a country is the UK. However, a 60 Hz output is preferred in countries where 60 Hz has been approved for domestic power supplies. The USA is an example of such a country. It will be appreciated that the frequency required will be determined on a case-by-case basis in accordance with the standards of the country in which the EV is being manufactured and/or used.

Existing electric vehicles can be charged by plugging them into a socket capable of supplying power, e.g. power from the grid. Typically, this involves connecting the onboard charger directly to the grid via a cable / plug-in charger, or via a conventional cable / conventional plug-in charger. However, the onboard charger is bypassed in conventional MF WPT systems. This is because, in such conventional MF WPT systems the rectifier forms part of the vehicle assembly and feeds power directly into the electric vehicle's battery. However, an advantage of the present invention is that the OBC does not need to be bypassed, since the OBC can receive a high frequency AC input, unlike conventional OBCs. This means no rectifier component separate to the OBC is needed, unlike conventional MF WPT (wireless charging) systems.

Under some current legal standards, the amount of power that can be fed directly to the OBC of the vehicle is capped (for example, at about 7.4 kW if using a single-phase supply). However, there are no such legal limits, at present, when delivering power straight to the battery.

The EV of the invention can use any suitable AC frequency. However, standards and/or legal restrictions often limit the frequencies that are permitted to be used. Suitably, the frequencies used are 50-60 Hz and 70-95 kHz. Most preferably, the frequencies are around 50 Hz, around 60 Hz, and around 85 kHz.

Returning to the OBC, the OBC may be switchable between one or more modes. For example, the onboard charger may be switchable between a plug-in charging mode and a wireless charging mode. The OBC may be configured to receive (I) an input alternating current at a low frequency (such as 50 Hz or 60 Hz), (ii) an input alternating current at a high frequency (such as 70-95 kHz, preferably about 80-85 kHz, and especially about 85 kHz), and/or (iii) an input direct current. By being able to receive both low and high frequency AC inputs, the OBC may be suitable for electric vehicles configured to be charged using both wireless and plug-in charging systems. By being able to receive a DC input, the OBC may be particularly useful when retrofitting an existing electric vehicle that already has a rectifier component separate to the original OBC because it enables the OBC to receive an input from that rectifier, rather than the rectifier having to supply power directly to the battery (via the BMS). The rectifier may be included as an integral component in a car pad (as described elsewhere herein).

The OBC has a low frequency AC mode, wherein the OBC is configured to receive a low frequency (e.g. 50 Hz or 60 Hz) AC input. When in the low frequency AC mode, the OBC may be configured to receive an input from a plug-in charger. Thus, the low frequency AC mode may be for plug-in charging.

The OBC additionally has a high frequency AC mode, wherein the OBC is configured to receive a high frequency (e.g. about 70-95 kHz, preferably about 80-85 kHz, and more preferably about 85 kHz) AC input. When in the high frequency AC mode, the OBC may be configured to receive an input from the electric vehicle's car pad. Thus, the high frequency AC mode may be for wireless charging. Embodiments that comprise such a high frequency AC mode are preferred as this removes the need for a converted separate from the OBC.

The OBC additionally has a DC mode, wherein the OBC is configured to receive a DC input. When in DC mode, the OBC may be configured to receive an input from a plug-in DC charger or a rectifier, which rectifier may in turn be configured to receive an input from the electric vehicle's car pad. Thus, the DC mode may be for plug-in or wireless charging. Known wireless charging car pads include their own rectifier and receive high frequency alternating current and output direct current; hence, if such a pad is fitted to the vehicle then its output can provide a direct current input to the OBC. In preferred embodiments of the invention, there is no change to how an EV fitted with the OBC receives high power DC. For example, DC power from a DCFC (DC fast charging station) is input directly to the BMS or battery. DC power from a car pad (via a rectifier, as described) is received by the OBC in DC mode. The DC interface of the OBC is thus preferably a low power DC interface or an auxiliary DC interface. In specific embodiments, one DC interface tested to date is rated at 11kW.

The OBC comprises two switches for switching the OBC between the low frequency AC mode, the high frequency AC mode, and the DC mode. More preferably, the OBC comprises a first switch for switching the OBC between a plug-in charging mode and a wireless charging mode. The OBC may alternatively or additionally comprise a second switch for switching the OBC between a wireless charging mode wherein input AC is received directly from the car pad and a wireless charging mode wherein input AC is received from the car pad via a rectifier separate to the OBC. By switching the OBC between the above modes, the electric vehicle may be charged wirelessly or via plug-in charging, as required. It will be appreciated that the OBC should be switched to the low frequency AC mode or the DC mode for plug-in charging and to the high frequency AC mode or the DC mode for wireless charging. When in the direct current mode the OBC may be configured to receive the input direct current from a plug-in DC charger or a rectifier; the rectifier may receive an input from a car pad of the electric vehicle or may be integral with the car pad.

The onboard charger may comprise a control network. The control network may be for controlling one or more component(s) of the OBC, such as one or more interface(s) of the OBC. Preferably, the control network is for controlling one or more component(s) of the OBC according to one or more input(s). Preferably, the one or more input(s) relate(s) to one or more of an AC voltage of an inductive (WPT) coil of a car pad, an AC current of an inductive (WPT) coil of a car pad, a voltage across a compensation capacitor of the OBC, a (rectified) DC voltage, a (rectified) DC current, and information about the OBC's pre-charge control, high side relay control, low side relay control, (power module) temperature, and/or gate drive signal (such as the OBC's S1, S2, S3, and/or S4 gate drive signal).

The control network may comprise one or more sub-network(s), such as a plurality of sub-networks. Preferably, the control network comprises a sub-network for controlling an interface of the OBC associated with the high frequency AC mode and for controlling an interface of the OBC associated with the DC mode.

The control network may comprise a plurality of component(s) configured to communicate, i.e. exchange information, with each other. This may be achieved via one or more communication pathway(s), which may be unidirectional or bidirectional.

The car pad can be connected to a component known as a "compensation network". The compensation network connected to the car pad of the EV of the invention can be conventional, or as standard in the industry. Such systems usually have a compensation network connected to the car pad.

The invention thus also provides a novel communication network to enable the various components of the system to communicate with each other.

Conventional systems usually have a power supply which supplies power to an inverter/converter. The converter is connected to a controller. This controller broadcasts (often wirelessly) a signal to a controller forming part of the EV (the former controller typically being known in the art as a "ground-side controller", with the latter controller typically being known in the art as a "vehicle-side controller"). The vehicle-side controller may communicate with the rectifier, an alignment controller, and/or the battery management system (BMS).

The wireless signal used in such a system usually conforms to the same legal standard as domestic Wi-Fi, namely IEEE 802.11n.

The vehicle-side controller may communicate with one or more other components of the electric vehicle. This is achieved, for example, by using a controller area network (CAN). This CAN may be specific to a particular vehicle or type of vehicle, such as, for example, vehicles produced by different manufacturers. The CAN may conform to the ISO standard ISO 15118-8.

In the invention, the ground-side controller may operate using a universal CAN. This may enable the ground-side controller, and thus the central and ground assemblies of the system of the invention, to communicate with any type of electric vehicle positioned at any of the ground pads of the system. This is advantageous compared to using a CAN that is specific to a particular vehicle or type of vehicle because this allows a variety of different types of vehicles to communicate with the system of the invention.

In the invention, the ground-side controller may be able to recognise/identify a particular vehicle or type of vehicle, for example based on data supplied to it by the vehicle-side controller.

In conventional systems, there is usually a compensation network connected to the ground pad, in addition to the compensation network connected to the car pad. However, in the invention, the system may comprise a (passive) radio frequency identification device ("RFID device"), and this may be connected to the ground pad in addition to the compensation network. This may enable the system to recognise the ground pad at which an electric vehicle has parked, which is not always possible or necessary in prior art systems. Specifically, many conventional wireless electric vehicle charging systems are in the form of one-to-one wireless electric vehicle charging systems. This means there is only one ground pad connected to each converter (typically via a conventional cable). In such one-to-one systems, the ground-side controller may be able to recognise the ground pad at which an electric vehicle has parked by recognising the converter involved (since, if there is only one ground pad connected to that converter, then that ground pad must be the ground pad at which that electric vehicle is parked if that converter is involved).

Once this recognition has been achieved, the ground-side controller may instruct the converter to supply a specified amount of power to that ground pad which can then be wirelessly supplied to the electric vehicle parked there. However, in wireless electric vehicle charging systems such as that disclosed in PCT/EP2022/065760, the wireless electric vehicle charging system may be in the form of a one-to-many wireless electric vehicle charging system. This means there may be a plurality of ground pads connected to each converter, typically via one or more capacitive cables. Capacitive cables for transmitting power between a power source and a load are known in the art and are described in, for example, WO 2010/026380, WO 2019/234449, WO 2021/094783, WO 2021/094782, and WO 2020/120932.

In such one-to-many systems, recognition of the converter involved by the ground-side controller may be insufficient to inform the ground-side controller which ground pad an electric vehicle has parked at (since that electric vehicle could be parked at any one of the ground pads connected to that converter). Thus, it is desirable to provide a means for informing the ground-side controller which ground pad an electric vehicle is parked at in a one-to-many wireless electric vehicle charging system to enable the ground-side controller to instruct the converter to supply the correct ground pad with power when required.

Also provided by the invention is a system comprising one or more ground pads capable of communicating with a ground-side controller and/or a control system. The system of the present invention may comprise one or more ground pads capable of communicating with the ground-side controller and/or the control system, all as defined elsewhere herein. Thus, the system of the present invention may comprise an RFID device connected to each ground pad. The RFID device may inform the ground-side controller (central assembly) as to the presence of an electric vehicle parking at the ground pad (ground assembly), as well as specifically which ground pad has been parked at. The ground-side controller, having received this information from the RFID device, may then instruct the converter to supply power to that particular ground pad which can then be supplied wirelessly to the electric vehicle parked there when required. This RFID device in the ground assembly may also be used as a reference by the vehicle-side controller when communicating to the central assembly (e.g. to the ground-side controller) which ground pad it is mated with.

The RFID technology may thus allow the ground-side controller of the system of the invention to recognise the ground pad at which an electric vehicle has parked.

Accordingly, the invention also provides a control system capable of communicating with different types of electric vehicle (EV). This system may comprise a (passive) RFID, optionally connected to one or more ground pads. This system may further comprise a ground-side controller and the RFID may be capable of informing the ground-side controller when an electric vehicle is at the ground pad to which the RFID is connected.

It will be appreciated that, in the invention, the control system and/or the ground-side controller may be capable of controlling the power flow to and from each ground pad. The control system and/or the ground-side controller may, in particular, control the amount of power supplied to each ground pad at a particular time. The control system and/or the ground-side controller may also, in particular, control the amount of power drawn from each ground pad when an electric vehicle is positioned at one or more of the ground pads supplying power to the ground pad. It will be appreciated that the power supplied to, or drawn from, each ground pad at a particular time may be different for each ground pad of the system.

In the invention, bidirectionality can be important. In addition to obtaining power from a power supply (for example, at a wireless electric vehicle charging point), an EV can itself supply power from its battery to the ground pad (for example, thereby supplying power back to the grid or power supply).

There may be multiple reasons why an EV can supply power by itself. The EV can, in some ways, be thought of as a mobile battery, or mobile electrical power supply. The EV may be charged at a time or location of the user's choice. It may also allow discharge of the battery, again at the time and location of the operator's choice.

For example, some airports may want to allow electric vehicles to park in a long stay car park for a reduced cost, on the condition that the EV operator is willing to allow the airport to extract power from the EV battery when needed. In this way, the airport can use power from EVs; this power may be used to provide power to components or parts of the airport, to charge (other) EVs, or to top up or restore an (original) power level. One can therefore supply power to or from the ground pad when the electric vehicle is parked, i.e. not in use and stationary.

In the present invention, bidirectionality is preferably achieved using the same component (i.e. the converter) rather than two separate components (namely a rectifier for charging and an inverter for resupply to the grid).

Suitably an extra inverter can be installed, for example between the battery and the car pad. This can provide a resupply route (from the battery to the inverter, and then to the car pad) for transmitting power back from the battery to the car pad. This is because the opposite route (from the car pad to the rectifier, and then to the battery) can only run in one direction (since the rectifier is unidirectional). Suitably one can co-locate the inverter component in the car pad.

The ground-side converter may be connected to a charging station management system (CSMS). This is otherwise known as the "cloud". This converter may be able to communicate with the CSMS using a CAN known as OCPP. By communicating using this CAN, the EV may be able to communicate with any CSMS desired since this could be the standard CAN used by many CSMSs.

Preferably, the CSMS can recognise the system, i.e. the central and ground assemblies comprising the converter and all ground pads connected thereto, as a single charging point, rather than recognising each ground pad separately, as there may only be one ground-side converter. This is particularly relevant to systems comprising a ground assembly such as that described in PCT/EP2022/065760 (published as WO 2022/258782).

The CSMS may also preferably communicate with the "vehicular cloud", for example the network connecting the EV's computer system and/or an app of the owner or operator of the vehicle which may, for example, be installed on their phone. The app may also monitor and/or give information on parameters or useful information relating to the battery, the battery's health, the battery's charge level etc. Suitably the following (pieces of) information can be communicated between the CSMS and the vehicular cloud: the details of the battery charge level and/or the details of which parking bay or location the EV is parked at or located in.

One advantage of this system is that communication from the CSMS to the vehicular cloud may assist to keep information available on the vehicular cloud up to date. This may be possible because of vehicle recognition, suitably via the (included) passive RFID.

An additional advantage of the control system of the invention is the speed with which the information available on the vehicular cloud is updated. In prior art systems the vehicular cloud has to first report information to the CSMS, which may take more time. In the invention the system may be advantageous, for example to operate a fleet of vehicles, where one may want to know (relatively quickly) which vehicles are charged, and which vehicles are not, or the battery charge levels of individual vehicles.

Embodiments of the invention thus provide a multi-interface OBC for electric vehicles. The multi-interface can be used for supplying power or extracting power via the different inputs/outputs namely the high-frequency AC input/output, low frequency AC input/output, and DC input/output. The multi-interface can be used with charging components from another manufacturer, through its bidirectional acceptance of high-frequency AC for WPT as well as DC from other WPT systems and/or rectifiers.

### Examples

The invention will now be described by way of the following examples, which are provided merely for the means of illustration and are not to be regarded as being limiting. These examples are provided with reference to the accompanying drawings, in which:
Fig. 1 shows a schematic block diagram of the internal circuitry of an onboard charger (OBC) of the invention;
Fig. 2 shows a circuit diagram for an onboard charger (OBC) of the invention;
Fig. 3 shows a circuit diagram for an onboard charger (OBC) of the invention having an additional filtration unit compared to the OBC of Figure 2;
Fig. 4 shows a circuit diagram for an onboard charger (OBC) of the invention being configured specifically to receive a single-phase input;
Fig. 5 shows a schematic block diagram of the internal circuitry of an onboard charger (OBC) of the invention;
Fig. 6 shows a schematic block diagram of a control network for the onboard charger (OBC) of Figure 1; and
Fig. 7 shows a schematic block diagram of inputs to an interface controller of the control network of Figure 6 in more detail.

### Example 1 - Onboard Charger (OBC)

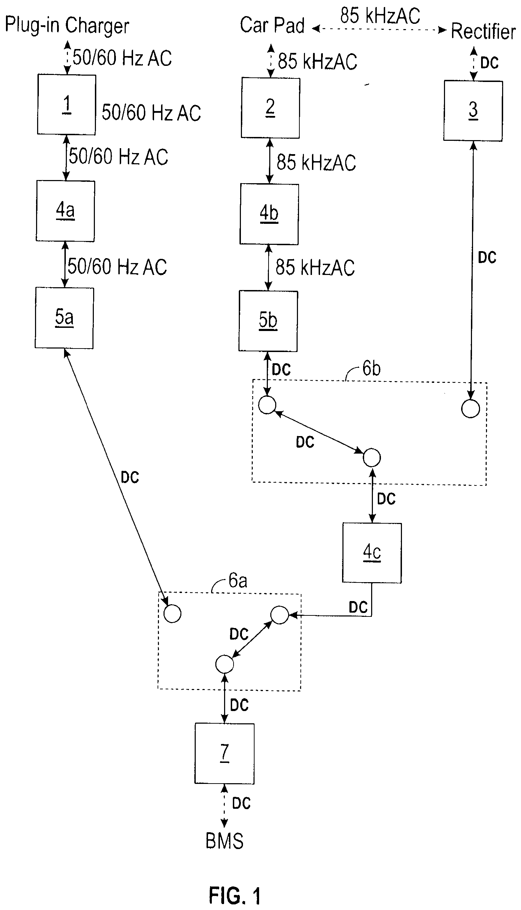

Referring to Figure 1, an OBC of the invention has three interfaces, these being a low frequency alternating current (AC) interface 1, a high frequency alternating current (AC) interface 2, and a direct current (DC) interface 3.

For the purposes of this Example, references to an electrically "upstream" portion of the OBC circuitry are intended to mean electrical components of the OBC connected close to the input, i.e. the plug-in charger and/or the car pad, whilst references to an electrically "downstream" portion of the OBC circuitry are intended to mean electrical components of the OBC connected close to the output, i.e. the battery management system (BMS). Thus, if one component is said to be electrically "upstream" of another component, then that one component is connected closer to the input than the other. Conversely, if one component is said to be electrically "downstream" of another component, then that one component is connected closer to the output than the other component.

The low frequency AC Interface 1 is configured to receive an AC input from a plug-in charger at a frequency of about 50 Hz or about 60 Hz during plug-in charging. This interface 1 then passes this low frequency AC input to a filtration unit 4a, which eliminates (or at least dampens) errant harmonics in the input AC, before passing the input AC onto a power factor correction (PFC) unit 5a. The PFC unit 5a has a rectifier functionality, and thus rectifies the input AC to DC. The PFC unit 5a is connected downstream to a switch 6a (indicated by the dashed lines in Figure 1), as explained in more detail below.

The low frequency AC interface 1 suitably conforms to an appropriate industry standard, such as IEC 61851, SAE J1772, GB, or a similar standard.

The high frequency AC interface 2 is configured to receive an AC input from the electric vehicle's car pad at a frequency of about 85 kHz during wireless charging. This interface 2 then passes this high frequency AC input to a filtration unit 4b, which eliminates (or at least dampens) errant harmonics in the input AC before passing the input AC onto a PFC unit 5b. The PFC unit 5b has a rectifier functionality, and thus rectifies the input AC to DC. The PFC unit 5b is connected to a switch 6b (indicated by the dotted lines in Figure 1), as explained in more detail below.

The high frequency AC interface 2 suitably conforms to an appropriate industry standard, such as IEC 61851, SAE J1772, GB, GB/T (20234/18487/27930), ISO 15118, SAE J2954, IEC 61980, or a similar standard.

The DC interface 3 is configured to receive a DC input, such as a DC input from a plug-in DC charger or, more commonly, a DC input from a rectifier elsewhere in the electric vehicle which is connected to the vehicle's car pad and adapted to convert an 85 kHz AC input to DC (to be supplied to the OBC's DC interface 3). The DC interface 3 is connected to the switch 6b. Industry-known car pads include an integral rectifier; their output can thus go into this DC input. DC Interface 3 thus enables interoperability with those integral-rectifier car pads of manufacturers in the industry.

The DC interface 3 suitably conforms to an appropriate industry standard, such as ISO 15118, DIN 70121, CHAdeMO, CCS, or a similar standard.

The switch 6b is configured such that only one of the high frequency AC interface 2 and the DC interface 3 may be electrically connected to the downstream components of the OBC at any given time. The switch 6b may thus be used to switch the OBC between a high frequency AC mode and a DC mode.

Downstream, the switch 6b is connected to another filtration unit 4c. This filtration unit 4c helps to filter high-order harmonics and errant frequencies still present following rectification of the high frequency AC input by the PFC unit 5b. It will be appreciated that this is not an issue for the DC input to the DC interface 3 and thus, if the switch 6b is configured such that the DC interface 3 is active, rather than the high frequency AC interface 2, then the DC supplied to the filtration unit 4c will pass through the filtration unit 4c unchanged. The filtration unit 4c is connected downstream to the switch 6a.

The switch 6a is configured such that only one of (i) the upstream circuitry associated with the low frequency AC interface 1, and (ii) the upstream circuitry associated with the high frequency AC interface 2 and the DC interface 3 may be connected to the downstream components of the OBC at any given time. Thus, the switch 6a may be used to switch the OBC between (i) a low frequency AC mode, and (ii) either a high frequency AC mode or a DC mode.

The PFC stage of this OBC can be described as a bidirectional totem pole converter with a full bridge structure.

Downstream, the switch 6a is connected to a DC-DC converter 7, which transforms the voltage of the DC supplied to it from the switch 6a to the voltage required by the electric vehicle's battery. The OBC then outputs this transformed DC at the required voltage to the electric vehicle's battery management system (BMS), which then uses this DC to charge the battery.

The electrical circuitry of the OBC described above is described in terms of charging of the electric vehicle's battery. However, this OBC is bidirectional and can thus be used in an electric vehicle for discharging the battery's power to the grid or another load when required. Accordingly, it will be appreciated that all of the connections between the electrical components of the OBC described above are bidirectional (hence the use of double-headed arrows to indicate these connections in Figure 1). Importantly, the PFC units 5a, 5b each have an inverter functionality, in addition to their rectifier functionalities. This enables the PFC units 5a, 5b to be bidirectional and thus convert an input DC to an output AC at the appropriate frequency.

It will be appreciated that In such a bidirectional OBC the interfaces 1, 2, and 3 may each be used as an input and/or as an output depending on the direction of current flow at any given time. Similarly, the DC output from the DC-DC converter 7 to the BMS during charging of the battery may instead be a DC input from the BMS to the DC-DC converter 7 when current flows in the other direction for supply to the grid or another load (i.e. during discharging).

### Example 2 - Switching of the OBC of Example 1 between modes

It will be appreciated from Example 1 above that, at any given time, only one of the low frequency AC interface 1, the high frequency AC interface 2, and the DC interface 3 may be electrically connected to the OBC's output ("output" here meaning the DC output from the DC-DC converter to the BMS during charging) and thus the BMS due to the presence of the switches 6a, 6b. Thus, by appropriately controlling the position of these two switches, one may control which of these three interfaces the OBC selects for connection to the battery at a particular time. It will be appreciated that, in Figure 1, the high frequency AC interface 2 is currently selected and thus the OBC shown is in the high frequency AC mode.

The OBC of Example 1 has a low frequency AC mode whereby the low frequency AC interface 1 is selected. The OBC also has a high frequency AC mode whereby the high frequency AC interface 2 is selected (as in Figure 1), and a DC mode whereby the DC interface 3 is selected. The selection of one of these three modes over the other two is achieved by appropriately positioning the switches 6a, 6b.

When a plug-in charger is connected to the OBC, the low frequency AC mode will be selected, thus allowing the plug-in charger to supply power to the low frequency AC interface 1 at 50 Hz or 60 Hz. Due to the positioning of the switches 6a, 6b, the OBC will then process this 50 Hz or 60 Hz AC input, as explained in Example 1, and will subsequently pass DC at an appropriate voltage to the BMS, which will use this DC to charge the battery.

Similarly, when the electric vehicle is charging wirelessly and power is thus received by a car pad of the electric vehicle, the high frequency AC mode or the DC mode may be selected. The selection of the high frequency AC mode or the DC mode may depend on whether the OBC has been installed as part of a new electric vehicle or retrofitted as part of an older electric vehicle having a rectifier component separate to the OBC. In the case of the former, the DC interface 3 is unlikely to be used and thus the high frequency AC mode will be selected. In the case of the latter, either the high frequency AC mode or the DC mode may be appropriate and may thus be selected; which of these modes will be selected in such a case will depend on the specific application of the OBC and the choice of the electric vehicle's user, operator, or manufacturer.

The switches 6a, 6b may be controlled by a variety of means, including by manual inputs from the user/operator of the electric vehicle, as well as by the control system of the invention (such as an OBC controller). Again, the control means used to switch the OBC between the three modes as applicable will be for the user, operator, or manufacturer of the electric vehicle to decide, as appropriate.

### Example 3 - Onboard Charger (OBC)

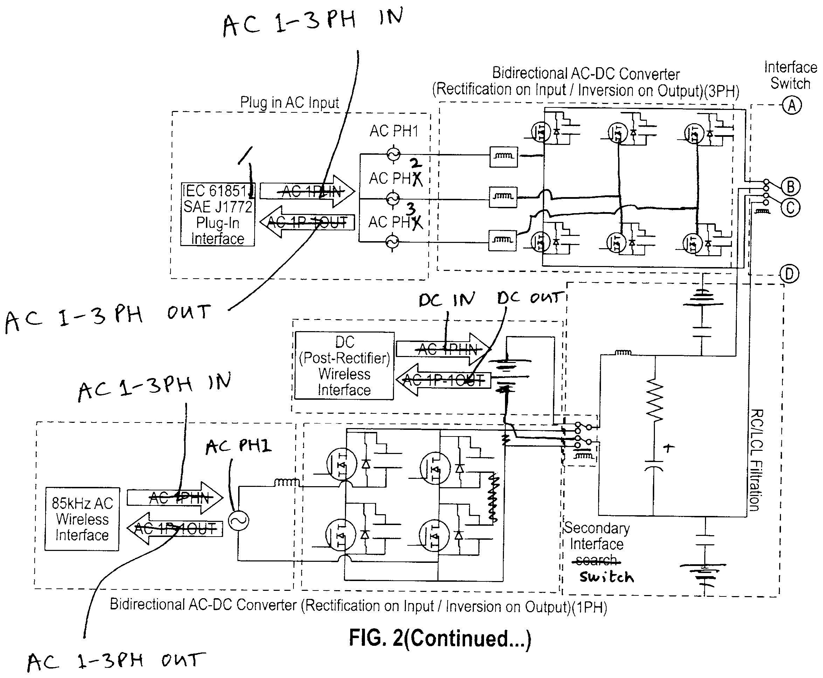

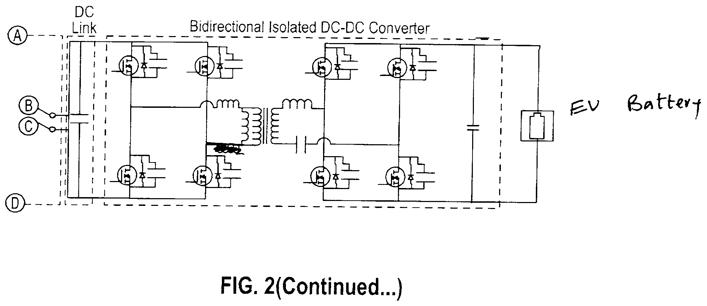

Referring to Figure 2, an OBC of the invention has three interfaces, these being a low frequency alternating current (AC) interface (plug-in interface), a high frequency alternating current (AC) interface (85 kHz AC Wireless Interface), and a direct current (DC) interface (DC (Post-Rectifier) Wireless Interface).

For the purposes of this Example, references to an electrically "upstream" portion of the OBC circuitry are intended to mean electrical components of the OBC connected close to the input, i.e. the plug-in charger and/or the car pad, whilst references to an electrically "downstream" portion of the OBC circuitry are intended to mean electrical components of the OBC connected close to the output, i.e. the battery management system (BMS). Thus, if one component is said to be electrically "upstream" of another component, then that one component is connected closer to the input than the other. Conversely, if one component is said to be electrically "downstream" of another component, then that one component is connected closer to the output than the other component.

The plug-in interface is configured to receive a single-phase or three-phase AC input from a plug-in charger at a frequency of about 50 Hz or about 60 Hz during plug-in charging.

This interface then passes this low frequency AC input to a filtration unit comprising three inductors (one for each phase of the input AC), which eliminates (or at least dampens) errant harmonics in the input AC, before passing the input AC onto a power factor correction (PFC) unit. The PFC unit has a rectifier functionality, and thus rectifies the input AC to DC. This rectifier functionality comprises a collection of switches, namely six MOSFETs (two per phase of the AC input; one MOSFET for each phase being for use during charging, the other being for use during discharging). The PFC unit is connected downstream to an interface switch, as explained in more detail below.

The plug-in interface suitably conforms to an appropriate industry standard, such as IEC 61851, SAE J1772, GB, or a similar standard.

The 85 kHz AC Wireless Interface is configured to receive an AC input from the electric vehicle's car pad at a frequency of about 79-90 kHz during wireless charging (i.e. a frequency in accordance with industry standard SAE J2954). This interface then passes this high frequency AC input to a filtration unit comprising an inductor, which eliminates (or at least dampens) errant harmonics in the input AC, before passing the input AC onto a PFC unit. The PFC unit has a rectifier functionality, and thus rectifies the input AC to DC. This rectifier functionality comprises a collection of switches, namely four MOSFETs (two per phase of the AC input). The PFC unit is connected to a secondary interface switch, as explained in more detail below.

The 85 kHz AC Wireless Interface suitably conforms to an appropriate industry standard, such as IEC 61851, SAE J1772, GB/T (20234/18487/27930), ISO 15118, SAE J2954, IEC 61980, or a similar standard.

The DC (Post-Rectifier) Wireless Interface is configured to receive a DC input, such as a DC input from a plug-in DC charger, or a DC input from a rectifier elsewhere in the electric vehicle which is connected to the vehicle's car pad and adapted to convert an 85 kHz AC input to DC (to be supplied to the OBC's DC (Post-Rectifier) Wireless Interface). The DC (Post-Rectifier) Wireless Interface is connected to the secondary interface switch.

The DC (Post-Rectifier) Wireless Interface suitably conforms to an appropriate industry standard, such as ISO 15118, DIN 70121, CHAdeMO, CCS, or a similar standard.

The secondary interface switch, which is shown in Figure 2 as a double pole double throw (DPDT) relay, is configured such that only one of the 85 kHz AC Wireless Interface and the DC (Post-Rectifier) Wireless Interface may be electrically connected to the downstream components of the OBC at any given time. The secondary interface switch may thus be used to switch the OBC between a high frequency AC mode and a DC mode.

Downstream, the secondary interface switch is connected to another filtration unit, namely a RC/LCL filtration unit. This filtration unit helps to filter high-order harmonics and errant frequencies still present following rectification of the high frequency AC input by the PFC unit. It will be appreciated that this is not an issue for the DC input to the DC (Post-Rectifier) Wireless Interface and thus, if the secondary interface switch is configured such that the DC (Post-Rectifier) Wireless Interface is active, rather than the 85 kHz AC Wireless Interface, then the DC supplied to the filtration unit will pass through the filtration unit unchanged. The filtration unit is connected downstream to the interface switch.

The interface switch, which is shown in Figure 2 as a double pole double throw (DPDT) relay, is configured such that only one of (i) the upstream circuitry associated with the plug-in interface, and (ii) the upstream circuitry associated with the 85 kHz AC Wireless Interface and the DC (Post-Rectifier) Wireless Interface may be connected to the downstream components of the OBC at any given time. Thus, the interface switch may be used to switch the OBC between (i) a low frequency AC mode, and (ii) either a high frequency AC mode or a DC mode.

Downstream, the interface switch is connected to a DC link, which acts as an intermediary buffer element between the input source and the output load and is advantageous because the source and the load may have different instantaneous power, voltage, and/or frequency. This DC link is in the form of a capacitor and may either act as an intermediary between the AC-DC Converter of the plug-in interface and the DC-DC converter, or as an intermediary between the PFC unit of the 85 kHz AC Wireless Interface or the DC (Post-Rectifier) Wireless Interface, according to the position of the interface switch as well as the secondary interface switch.

The PFC stage of this OBC can be described as a bidirectional totem pole converter with a full bridge structure.

Downstream, the interface switch is connected to a bidirectional isolated DC-DC converter, namely a bidirectional CLLLC resonant converter, which transforms the voltage of the DC supplied to it from the DC link to the voltage required by the electric vehicle's battery. This converter is isolated via a transformer as shown in Figure 2 and has four MOSFET switches on each side of the transformer. The OBC then outputs this transformed DC at the required voltage to charge the battery.

The electrical circuitry of the OBC described above is described in terms of charging of the electric vehicle's battery. However, this OBC is bidirectional and can thus be used in an electric vehicle for discharging the battery's power to the grid or another load when required. Accordingly, it will be appreciated that all of the connections between the electrical components of the OBC described above are bidirectional. Importantly, the PFC units each have an inverter functionality, in addition to their rectifier functionalities. This enables the PFC units to be bidirectional and thus convert an input DC to an output AC at the appropriate frequency.

It will be appreciated that In such a bidirectional OBC the three interfaces may each be used as an input and/or as an output depending on the direction of current flow at any given time. Similarly, the DC output from the bidirectional isolated DC-DC converter during charging of the battery may instead be a DC input to the bidirectional isolated DC-DC converter when current flows in the other direction for supply to the grid or another load (i.e. during discharging).

### Example 4 - Switching of the OBC of Example 3 between modes

It will be appreciated from Example 3 above that, at any given time, only one of the plug-in interface, the 85 kHz AC Wireless Interface, and the DC (Post Rectifier) Wireless Interface may be electrically connected to the OBC's output ("output" here meaning the DC output from the bidirectional isolated DC-DC converter during charging) and thus the BMS due to the presence of the interface switch and the secondary interface switch. Thus, by appropriately controlling the position of these two switches, one may control which of these three interfaces the OBC is selected for connection to the battery at a particular time. It will be appreciated that, in Figure 2, the plug-in interface is currently selected and thus the OBC shown is in the low frequency AC mode.

The OBC of Example 3 has a low frequency AC mode whereby the plug-in interface is selected (as in Figure 2). The OBC also has a high frequency AC mode whereby the 85 kHz AC Wireless Interface is selected, and a DC mode whereby the DC (Post Rectifier) Wireless Interface is selected. The selection of one of these three modes over the other two is achieved by appropriately positioning the interface switch and the secondary interface switch.

When a AC plug-in charger is connected to the OBC, the low frequency AC mode will be selected, thus allowing the plug-in charger to supply power to the plug-in interface at 50 Hz or 60 Hz. Due to the positioning of the interface switch and the secondary interface switch, the OBC will then process this 50 Hz or 60 Hz AC input, as explained in Example 3, to output DC at an appropriate voltage for charging the battery.

Similarly, when the electric vehicle is charging wirelessly and power is thus received by a car pad of the electric vehicle, the high frequency AC mode or the DC mode may be selected. The selection of the high frequency AC mode or the DC mode may depend on whether the OBC has been installed as part of a new electric vehicle or retrofitted as part of an older electric vehicle having a rectifier component separate to the OBC. In the case of the former, the DC (Post Rectifier) Wireless Interface is unlikely to be used and thus the high frequency AC mode will be selected. In the case of the latter, either the high frequency AC mode or the DC mode may be appropriate and may thus be selected; which of these modes will be selected in such a case will depend on the specific application of the OBC and the choice of the electric vehicle's user, operator, or manufacturer.

The interface switch and the secondary interface switch may be controlled by a variety of means, including by manual inputs from the user/operator of the electric vehicle, as well as by the control system of the invention (such as an OBC controller). Again, the control means used to switch the OBC between the three modes as applicable will be for the user, operator, or manufacturer of the electric vehicle to decide, as appropriate.

### Example 5 - Onboard Charger (OBC) - Full Filtration Design

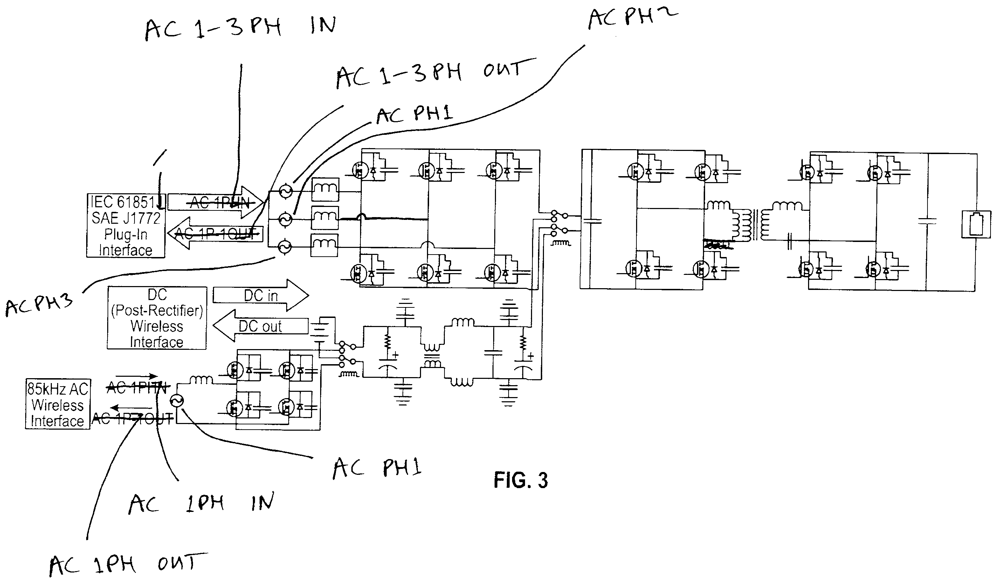

Referring to Figure 3, an OBC of the invention has three interfaces, these being a low frequency alternating current (AC) interface (plug-in interface), a high frequency alternating current (AC) interface (85 kHz AC Wireless Interface), and a direct current (DC) interface (DC (Post-Rectifier) Wireless Interface).

For the purposes of this Example, references to an electrically "upstream" portion of the OBC circuitry are intended to mean electrical components of the OBC connected close to the input, i.e. the plug-in charger and/or the car pad, whilst references to an electrically "downstream" portion of the OBC circuitry are intended to mean electrical components of the OBC connected close to the output, i.e. the battery management system (BMS). Thus, if one component is said to be electrically "upstream" of another component, then that one component is connected closer to the input than the other. Conversely, if one component is said to be electrically "downstream" of another component, then that one component is connected closer to the output than the other component.

The plug-in interface is configured to receive a single-phase or three-phase AC input from a plug-in charger at a frequency of about 50 Hz or about 60 Hz during plug-in charging. This interface then passes this low frequency AC input to a filtration unit comprising three inductors (one for each phase of the input AC), which eliminates (or at least dampens) errant harmonics in the input AC, before passing the input AC onto a power factor correction (PFC) unit. The PFC unit has a rectifier functionality, and thus rectifies the input AC to DC. This rectifier functionality comprises a collection of switches, namely six MOSFETs (two per phase of the AC input; one MOSFET for each phase being for use during charging, the other being for use during discharging). The PFC unit is connected downstream to an interface switch, as explained in more detail below.

The plug-in interface suitably conforms to an appropriate industry standard, such as IEC 61851, SAE J1772, GB, or a similar standard.

The 85 kHz AC Wireless Interface is configured to receive an AC input from the electric vehicle's car pad at a frequency of about 79-90 kHz during wireless charging (i.e. a frequency in accordance with industry standard SAE J2954). This interface then passes this high frequency AC input to a filtration unit comprising an inductor, which eliminates (or at least dampens) errant harmonics in the input AC, before passing the input AC onto a PFC unit. The PFC unit has a rectifier functionality, and thus rectifies the input AC to DC. This rectifier functionality comprises a collection of switches, namely four MOSFETs (two per phase of the AC input). The PFC unit is connected to a secondary interface switch, as explained in more detail below.

The 85 kHz AC Wireless Interface suitably conforms to an appropriate industry standard, such as IEC 61851, SAE J1772, GB/T (20234/18487/27930), ISO 15118, SAE J2954, IEC 61980, or a similar standard.

The DC (Post-Rectifier) Wireless Interface is configured to receive a DC input, such as a DC input from a plug-in DC charger, or a DC input from a rectifier elsewhere in the electric vehicle which is connected to the vehicle's car pad and adapted to convert an 85 kHz AC input to DC (to be supplied to the OBC's DC (Post-Rectifier) Wireless Interface). The DC (Post-Rectifier) Wireless Interface is connected to the secondary interface switch.

The DC (Post-Rectifier) Wireless Interface suitably conforms to an appropriate industry standard, such as ISO 15118, DIN 70121, CHAdeMO, CCS, or a similar standard.

The secondary interface switch, which is shown in Figure 3 as a double pole double throw (DPDT) relay, is configured such that only one of the 85 kHz AC Wireless Interface and the DC (Post-Rectifier) Wireless Interface may be electrically connected to the downstream components of the OBC at any given time. The secondary interface switch may thus be used to switch the OBC between a high frequency AC mode and a DC mode.

Downstream, the secondary interface switch is connected to another filtration unit, namely a RC/LCL filtration unit. This filtration unit helps to filter high-order harmonics and errant frequencies still present following rectification of the high frequency AC input by the PFC unit. It will be appreciated that this is not an issue for the DC input to the DC (Post-Rectifier) Wireless Interface and thus, if the secondary interface switch is configured such that the DC (Post-Rectifier) Wireless Interface is active, rather than the 85 kHz AC Wireless Interface, then the DC supplied to the filtration unit will pass through the filtration unit unchanged. The filtration unit is connected downstream to a further filtration unit and then the interface switch. The further filtration unit comprises a fully isolated EMI filter comprising a parallel damped LC filter and a transformer for source isolation. This topology is able to filter both common-mode and differential-mode noise currents. The topology of the filter itself, and the component values and constructions therein, are subject to the specific operating parameters of any given design, but the key component here is the presence of a transformer.

The Interface switch, shown in Figure 3 as a double pole double throw (DPDT) relay, is configured such that only one of (i) the upstream circuitry associated with the plug-in interface, and (ii) the upstream circuitry associated with the 85 kHz AC Wireless Interface and the DC (Post-Rectifier) Wireless Interface may be connected to the downstream components of the OBC at any given time. Thus, the interface switch may be used to switch the OBC between (i) a low frequency AC mode, and (ii) either a high frequency AC mode or a DC mode.

Downstream, the interface switch is connected to a DC link, which acts as an intermediary buffer element between the input source and the output load and is advantageous because the source and the load may have different instantaneous power, voltage, and/or frequency. This DC link is in the form of a capacitor and may either act as an intermediary between the AC-DC Converter of the plug-in interface and the DC-DC converter, or as an intermediary between the PFC unit of the 85 kHz AC Wireless Interface or the DC (Post-Rectifier) Wireless Interface, according to the position of the interface switch as well as the secondary interface switch.

The PFC stage of this OBC can be described as a bidirectional totem pole converter with a full bridge structure.

Downstream, the interface switch is connected to a bidirectional isolated DC-DC converter, namely a bidirectional CLLLC resonant converter, which transforms the voltage of the DC supplied to it from the DC link to the voltage required by the electric vehicle's battery. This converter is isolated via a transformer as shown in Figure 3 and has four MOSFET switches on each side of the transformer. The OBC then outputs this transformed DC at the required voltage to charge the battery.

The electrical circuitry of the OBC described above is described in terms of charging of the electric vehicle's battery. However, this OBC is bidirectional and can thus be used in an electric vehicle for discharging the battery's power to the grid or another load when required. Accordingly, it will be appreciated that all of the connections between the electrical components of the OBC described above are bidirectional. Importantly, the PFC units each have an inverter functionality, in addition to their rectifier functionalities. This enables the PFC units to be bidirectional and thus convert an input DC to an output AC at the appropriate frequency.

It will be appreciated that in such a bidirectional OBC the three interfaces may each be used as an input and/or as an output depending on the direction of current flow at any given time. Similarly, the DC output from the bidirectional isolated DC-DC converter during charging of the battery may instead be a DC input to the bidirectional isolated DC-DC converter when current flows in the other direction for supply to the grid or another load (i.e. during discharging).

### Example 6 - Switching of the OBC of Example 5 between modes

It will be appreciated from Example 5 above that, at any given time, only one of the plug-in interface, the 85 kHz AC Wireless Interface, and the DC (Post Rectifier) Wireless Interface may be electrically connected to the OBC's output ("output" here meaning the DC output from the bidirectional isolated DC-DC converter during charging) and thus the BMS due to the presence of the interface switch and the secondary interface switch. Thus, by appropriately controlling the position of these two switches, one may control which of these three interfaces the OBC is selected for connection to the battery at a particular time. It will be appreciated that, in Figure 3, the plug-in interface is currently selected and thus the OBC shown is in the low frequency AC mode.

The OBC of Example 5 has a low frequency AC mode whereby the plug-in interface is selected (as in Figure 3). The OBC also has a high frequency AC mode whereby the 85 kHz AC Wireless Interface is selected, and a DC mode whereby the DC (Post Rectifier) Wireless Interface is selected. The selection of one of these three modes over the other two is achieved by appropriately positioning the interface switch and the secondary interface switch.

When an AC plug-in charger is connected to the OBC, the low frequency AC mode will be selected, thus allowing the plug-in charger to supply power to the plug-in interface at 50 Hz or 60 Hz. Due to the positioning of the interface switch and the secondary interface switch, the OBC will then process this 50 Hz or 60 Hz AC input, as explained in Example 5, to output DC at an appropriate voltage for charging the battery.

Similarly, when the electric vehicle is charging wirelessly and power is thus received by a car pad of the electric vehicle, the high frequency AC mode or the DC mode may be selected. The selection of the high frequency AC mode or the DC mode may depend on whether the OBC has been installed as part of a new electric vehicle or retrofitted as part of an older electric vehicle having a rectifier component separate to the OBC. In the case of the former, the DC (Post Rectifier) Wireless Interface is unlikely to be used and thus the high frequency AC mode will be selected. In the case of the latter, either the high frequency AC mode or the DC mode may be appropriate and may thus be selected; which of these modes will be selected in such a case will depend on the specific application of the OBC and the choice of the electric vehicle's user, operator, or manufacturer.

The interface switch and the secondary interface switch may be controlled by a variety of means, including by manual inputs from the user/operator of the electric vehicle, as well as by the control system of the invention (such as an OBC controller). Again, the control means used to switch the OBC between the three modes as applicable will be for the user, operator, or manufacturer of the electric vehicle to decide, as appropriate.

### Example 7 - Onboard Charger (OBC) - Single Phase Design

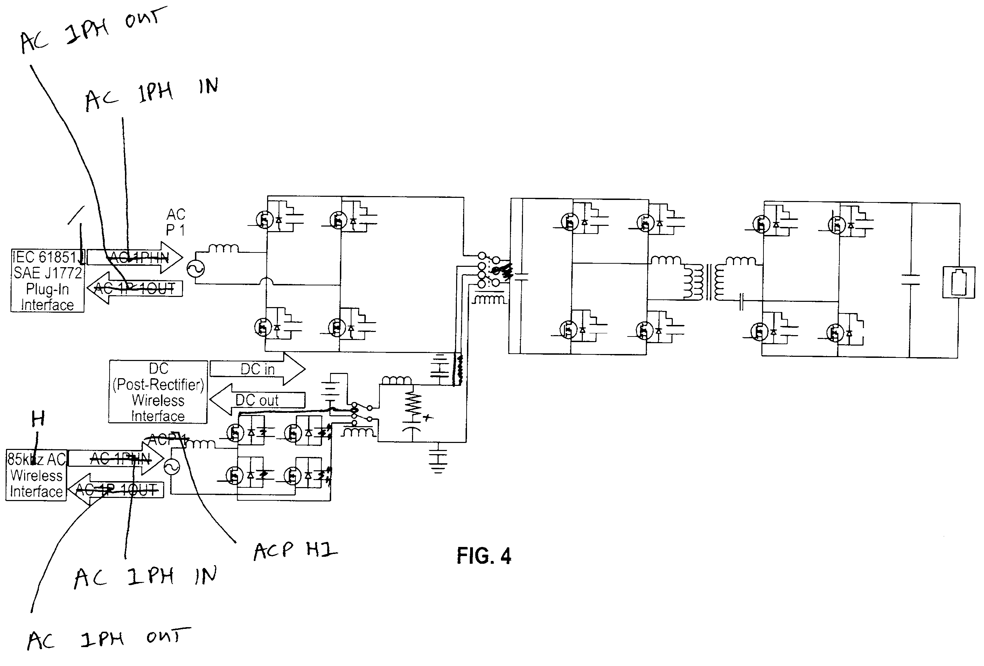

Referring to Figure 4, an OBC of the invention has three interfaces, these being a low frequency alternating current (AC) interface (plug-in interface), a high frequency alternating current (AC) interface (85 kHz AC Wireless Interface), and a direct current (DC) interface (DC (Post-Rectifier) Wireless Interface).

For the purposes of this Example, references to an electrically "upstream" portion of the OBC circuitry are intended to mean electrical components of the OBC connected close to the input, i.e. the plug-in charger and/or the car pad, whilst references to an electrically "downstream" portion of the OBC circuitry are intended to mean electrical components of the OBC connected close to the output, i.e. the battery management system (BMS). Thus, if one component is said to be electrically "upstream" of another component, then that one component is connected closer to the input than the other. Conversely, if one component is said to be electrically "downstream" of another component, then that one component is connected closer to the output than the other component.

The plug-in interface is configured to receive a single-phase AC input from a plug-in charger at a frequency of about 50 Hz or about 60 Hz during plug-in charging. This interface then passes this low frequency AC input to a filtration unit comprising an inductor, which eliminates (or at least dampens) errant harmonics in the input AC, before passing the input AC onto a power factor correction (PFC) unit. The PFC unit has a rectifier functionality, and thus rectifies the input AC to DC. This rectifier functionality comprises a collection of switches, namely four MOSFETs (two MOSFETs being for use during charging, the other two being for use during discharging). The PFC unit is connected downstream to an interface switch, as explained in more detail below.

The plug-in interface suitably conforms to an appropriate industry standard, such as IEC 61851, SAE J1772, GB, or a similar standard.

The 85 kHz AC Wireless Interface is configured to receive an AC input from the electric vehicle's car pad at a frequency of about 79-90 kHz during wireless charging (i.e. a frequency in accordance with industry standard SAE J2954). This interface then passes this high frequency AC input to a filtration unit comprising an inductor, which eliminates (or at least dampens) errant harmonics in the input AC, before passing the input AC onto a PFC unit. The PFC unit has a rectifier functionality, and thus rectifies the input AC to DC. This rectifier functionality comprises a collection of switches, namely four MOSFETs (two per phase of the AC input). The PFC unit is connected to a secondary interface switch, as explained in more detail below.

The 85 kHz AC Wireless Interface suitably conforms to an appropriate industry standard, such as IEC 61851, SAE J1772, GB/T (20234/18487/27930), ISO 15118, SAE J2954, IEC 61980, or a similar standard.

The DC (Post-Rectifier) Wireless Interface is configured to receive a DC input, such as a DC input from a plug-in DC charger, or a DC input from a rectifier elsewhere in the electric vehicle, which is connected to the vehicle's car pad and adapted to convert an 85 kHz AC input to DC (to be supplied to the OBC's DC (Post-Rectifier) Wireless Interface). The DC (Post-Rectifier) Wireless Interface is connected to the secondary interface switch.

The DC (Post-Rectifier) Wireless Interface suitably conforms to an appropriate industry standard, such as ISO 15118, DIN 70121, CHAdeMO, CCS, or a similar standard.

The secondary interface switch, which is shown in Figure 4 as a double pole double throw (DPDT) relay, is configured such that only one of the 85 kHz AC Wireless Interface and the DC (Post-Rectifier) Wireless Interface may be electrically connected to the downstream components of the OBC at any given time. The secondary interface switch may thus be used to switch the OBC between a high frequency AC mode and a DC mode.

Downstream, the secondary interface switch is connected to another filtration unit, namely a RC/LCL filtration unit. This filtration unit helps to filter high-order harmonics and errant frequencies still present following rectification of the high frequency AC input by the PFC unit. It will be appreciated that this is not an issue for the DC input to the DC (Post-Rectifier) Wireless Interface and thus, if the secondary interface switch is configured such that the DC (Post-Rectifier) Wireless Interface is active, rather than the 85 kHz AC Wireless Interface, then the DC supplied to the filtration unit will pass through the filtration unit unchanged. The filtration unit is connected downstream to the interface switch.

The Interface switch, shown in Figure 4 as a double pole double throw (DPDT) relay, is configured such that only one of (i) the upstream circuitry associated with the plug-in interface, and (ii) the upstream circuitry associated with the 85 kHz AC Wireless Interface and the DC (Post-Rectifier) Wireless Interface may be connected to the downstream components of the OBC at any given time. Thus, the interface switch may be used to switch the OBC between (i) a low frequency AC mode, and (ii) either a high frequency AC mode or a DC mode.

Downstream, the interface switch is connected to a DC link, which acts as an intermediary buffer element between the input source and the output load and is advantageous because the source and the load may have different instantaneous power, voltage, and/or frequency. This DC link is in the form of a capacitor and may either act as an intermediary between the AC-DC Converter of the plug-in interface and the DC-DC converter, or as an intermediary between the PFC unit of the 85 kHz AC Wireless Interface or the DC (Post-Rectifier) Wireless Interface, according to the position of the interface switch as well as the secondary interface switch.

The PFC stage of this OBC can be described as a bidirectional totem pole converter with a full bridge structure.

Downstream, the interface switch is connected to a bidirectional isolated DC-DC converter, namely a bidirectional CLLLC resonant converter, which transforms the voltage of the DC supplied to it from the DC link to the voltage required by the electric vehicle's battery. This converter is isolated via a transformer as shown in Figure 4 and has four MOSFET switches on each side of the transformer. The OBC then outputs this transformed DC at the required voltage to charge the battery.

The electrical circuitry of the OBC described above is described in terms of charging of the electric vehicle's battery. However, this OBC is bidirectional and can thus be used in an electric vehicle for discharging the battery's power to the grid or another load when required. Accordingly, it will be appreciated that all of the connections between the electrical components of the OBC described above are bidirectional. Importantly, the PFC units each have an inverter functionality, in addition to their rectifier functionalities. This enables the PFC units to be bidirectional and thus convert an input DC to an output AC at the appropriate frequency.

It will be appreciated that in such a bidirectional OBC the three interfaces may each be used as an input and/or as an output depending on the direction of current flow at any given time. Similarly, the DC output from the bidirectional isolated DC-DC converter during charging of the battery may instead be a DC input to the bidirectional isolated DC-DC converter when current flows in the other direction for supply to the grid or another load (i.e. during discharging).

### Example 8 - Switching of the OBC of Example 7 between modes

It will be appreciated from Example 7 above that, at any given time, only one of the plug-in interface, the 85 kHz AC Wireless Interface, and the DC (Post Rectifier) Wireless Interface may be electrically connected to the OBC's output ("output" here meaning the DC output from the bidirectional isolated DC-DC converter during charging) and thus the BMS due to the presence of the interface switch and the secondary interface switch. Thus, by appropriately controlling the position of these two switches, one may control which of these three interfaces the OBC is selected for connection to the battery at a particular time. It will be appreciated that, in Figure 4, the plug-in interface is currently selected and thus the OBC shown is in the low frequency AC mode.

The OBC of Example 7 has a low frequency AC mode whereby the plug-in interface is selected (as in Figure 4). The OBC also has a high frequency AC mode whereby the 85 kHz AC Wireless Interface is selected, and a DC mode whereby the DC (Post Rectifier) Wireless Interface is selected. The selection of one of these three modes over the other two is achieved by appropriately positioning the interface switch and the secondary interface switch.

When a plug-in charger is connected to the OBC, the low frequency AC mode will be selected, thus allowing the plug-in charger to supply power to the plug-in interface at 50 Hz or 60 Hz. Due to the positioning of the interface switch and the secondary interface switch, the OBC will then process this 50 Hz or 60 Hz AC input, as explained in Example 7, to output DC at an appropriate voltage for charging the battery.

Similarly, when the electric vehicle is charging wirelessly and power is thus received by a car pad of the electric vehicle, the high frequency AC mode or the DC mode may be selected. The selection of the high frequency AC mode or the DC mode may depend on whether the OBC has been installed as part of a new electric vehicle or retrofitted as part of an older electric vehicle having a rectifier component separate to the OBC. In the case of the former, the DC (Post Rectifier) Wireless Interface is unlikely to be used and thus the high frequency AC mode will be selected. In the case of the latter, either the high frequency AC mode or the DC mode may be appropriate and may thus be selected; which of these modes will be selected in such a case will depend on the specific application of the OBC and the choice of the electric vehicle's user, operator, or manufacturer.

The Interface switch and the secondary interface switch may be controlled by a variety of means, including by manual inputs from the user/operator of the electric vehicle, as well as by the control system of the invention (such as an OBC controller). Again, the control means used to switch the OBC between the three modes as applicable will be for the user, operator, or manufacturer of the electric vehicle to decide, as appropriate.

### Example 9 - Onboard Charger (OBC)

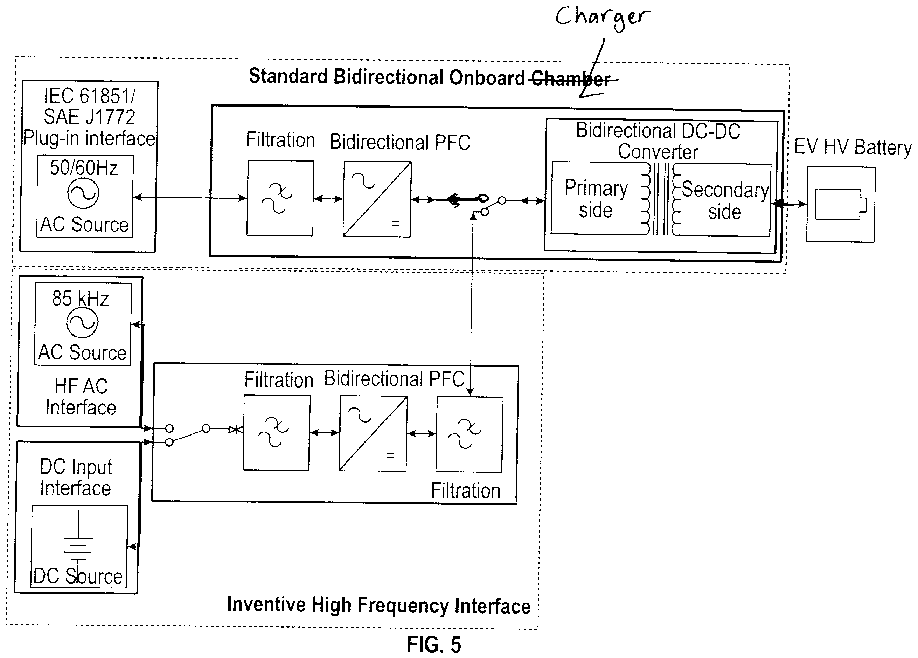

Referring to Figure 5, an OBC of the invention has three interfaces, these being a low frequency alternating current (AC) interface (plug-in interface), a high frequency alternating current (AC) interface (HF AC Interface), and a direct current (DC) interface (DC Input Interface).

For the purposes of this Example, references to an electrically "upstream" portion of the OBC circuitry are intended to mean electrical components of the OBC connected close to the input, i.e. the plug-in charger and/or the car pad, whilst references to an electrically "downstream" portion of the OBC circuitry are intended to mean electrical components of the OBC connected close to the output, i.e. the battery management system (BMS). Thus, if one component is said to be electrically "upstream" of another component, then that one component is connected closer to the input than the other. Conversely, if one component is said to be electrically "downstream" of another component, then that one component is connected closer to the output than the other component.

The plug-in interface is configured to receive a single-phase or three-phase AC input from a plug-in charger at a frequency of about 50 Hz or about 60 Hz during plug-in charging. This interface then passes this low frequency AC input to a filtration unit, which eliminates (or at least dampens) errant harmonics in the input AC, before passing the input AC onto a power factor correction (PFC) unit. The PFC unit has a rectifier functionality, and thus rectifies the input AC to DC. This rectifier functionality comprises a collection of switches (MOSFETs). The PFC unit is connected downstream to an interface switch, as explained in more detail below.

The plug-in interface suitably conforms to an appropriate industry standard, such as IEC 61851, SAE J1772, GB, or a similar standard.

The HF AC Interface is configured to receive an AC input from the electric vehicle's car pad at a frequency of about 85 kHz during wireless charging. The HF AC Interface is connected to a secondary interface switch, as explained in more detail below.

The HF AC Interface suitably conforms to an appropriate industry standard, such as IEC 61851, SAE J1772, GB/T (20234/18487/27930), ISO 15118, SAE J2954, IEC 61980, or a similar standard.

The DC Input Interface is configured to receive a DC input, such as a DC input from a plug-in DC charger, or a DC input from a rectifier elsewhere in the electric vehicle which is connected to the vehicle's car pad and adapted to convert an 85 kHz AC input to DC (to be supplied to the OBC's DC Input Interface). The DC Input Interface is connected to the secondary interface switch.

The DC Input Interface suitably conforms to an appropriate industry standard, such as ISO 15118, DIN 70121, CHAdeMO, CCS, or a similar standard.

The secondary interface switch is configured such that only one of the HF AC Interface and the DC Input Interface may be electrically connected to the downstream components of the OBC at any given time. The secondary interface switch may thus be used to switch the OBC between a high frequency AC mode and a DC mode.

Downstream, the secondary interface switch is connected to a filtration unit. This filtration unit helps to filter high-order harmonics and errant frequencies present in the high frequency AC input from the HF AC Interface. It will be appreciated that this is not an issue for the DC input to the DC Input Interface and thus, if the secondary interface switch is configured such that the DC Input Interface is active, rather than the HF AC Interface, then the DC supplied to the filtration unit will pass through the filtration unit unchanged. The filtration unit is connected downstream to a PFC unit. The PFC unit has a rectifier functionality, and thus rectifies the input AC to DC.

The PFC stage of this OBC can be described as a bidirectional totem pole converter with a full bridge structure.

Downstream, the PFC unit is connected to another filtration unit. This filtration unit helps to filter high-order harmonics and errant frequencies still present following rectification of the high frequency AC input by the PFC unit. It will be appreciated that this is not an issue for the DC input to the DC Input Interface and thus, if the secondary interface switch is configured such that the DC Input Interface is active, rather than the HF AC Interface, then the DC supplied to the filtration unit will pass through the filtration unit unchanged. The filtration unit is connected downstream to the interface switch.

The Interface switch is configured such that only one of (i) the upstream circuitry associated with the plug-in interface, and (ii) the upstream circuitry associated with the HF AC Interface and the DC Input Interface may be connected to the downstream components of the OBC at any given time. Thus, the interface switch may be used to switch the OBC between (i) a low frequency AC mode, and (ii) either a high frequency AC mode or a DC mode.

Downstream, the interface switch is connected to a bidirectional DC-DC converter, which transforms the voltage of the DC supplied to it from the interface switch to the voltage required by the electric vehicle's battery. The DC-DC converter is fully isolated, with switches (MOSFETs/IGBTs) on either side forming a full bridge. The OBC then outputs this transformed DC at the required voltage to charge the battery.

The electrical circuitry of the OBC described above is described in terms of charging of the electric vehicle's battery. However, this OBC is bidirectional and can thus be used in an electric vehicle for discharging the battery's power to the grid or another load when required. Accordingly, it will be appreciated that all of the connections between the electrical components of the OBC described above are bidirectional (hence the use of double-headed arrows to indicate these connections in Figure 5). Importantly, the PFC units each have an inverter functionality, in addition to their rectifier functionalities. This enables the PFC units to be bidirectional and thus convert an input DC to an output AC at the appropriate frequency.

It will be appreciated that in such a bidirectional OBC the three interfaces may each be used as an input and/or as an output depending on the direction of current flow at any given time. Similarly, the DC output from the bidirectional DC-DC converter during charging of the battery may instead be a DC input to the bidirectional DC-DC converter when current flows in the other direction for supply to the grid or another load (i.e. during discharging).

### Example 10 - Switching of the OBC of Example 9 between modes

It will be appreciated from Example 9 above that, at any given time, only one of the plug-in interface, the HF AC Interface, and the DC Input Interface may be electrically connected to the OBC's output ("output" here meaning the DC output from the bidirectional DC-DC converter during charging) and thus the BMS due to the presence of the interface switch and the secondary interface switch. Thus, by appropriately controlling the position of these two switches, one may control which of these three interfaces the OBC is selected for connection to the battery at a particular time. It will be appreciated that, in Figure 5, the DC Input interface is currently selected and thus the OBC shown is in the DC mode.

The OBC of Example 9 has a low frequency AC mode whereby the plug-in interface is selected. The OBC also has a high frequency AC mode whereby the HF AC Interface is selected, and a DC mode whereby the DC Input Interface is selected (as in Figure 5). The selection of one of these three modes over the other two is achieved by appropriately positioning the interface switch and the secondary interface switch.

When a plug-in charger is connected to the OBC, the low frequency AC mode will be selected, thus allowing the plug-in charger to supply power to the plug-in interface at 50 Hz or 60 Hz. Due to the positioning of the interface switch and the secondary interface switch, the OBC will then process this 50 Hz or 60 Hz AC input, as explained in Example 9, to output DC at an appropriate voltage for charging the battery.

Similarly, when the electric vehicle is charging wirelessly and power is thus received by a car pad of the electric vehicle, the high frequency AC mode or the DC mode may be selected. The selection of the high frequency AC mode or the DC mode may depend on whether the OBC has been installed as part of a new electric vehicle or retrofitted as part of an older electric vehicle having a rectifier component separate to the OBC. In the case of the former, the DC Input Interface is unlikely to be used and thus the high frequency AC mode will be selected. In the case of the latter, either the high frequency AC mode or the DC mode may be appropriate and may thus be selected; which of these modes will be selected in such a case will depend on the specific application of the OBC and the choice of the electric vehicle's user, operator, or manufacturer.

The interface switch and the secondary interface switch may be controlled by a variety of means, including by manual inputs from the user/operator of the electric vehicle, as well as by the control system of the invention (such as an OBC controller). Again, the control means used to switch the OBC between the three modes as applicable will be for the user, operator, or manufacturer of the electric vehicle to decide, as appropriate.

### Example 11 - OBC Control Network

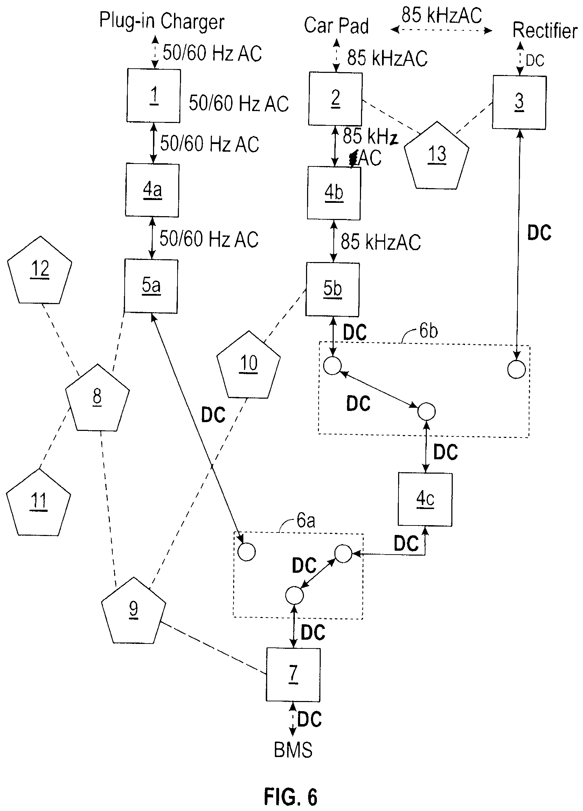

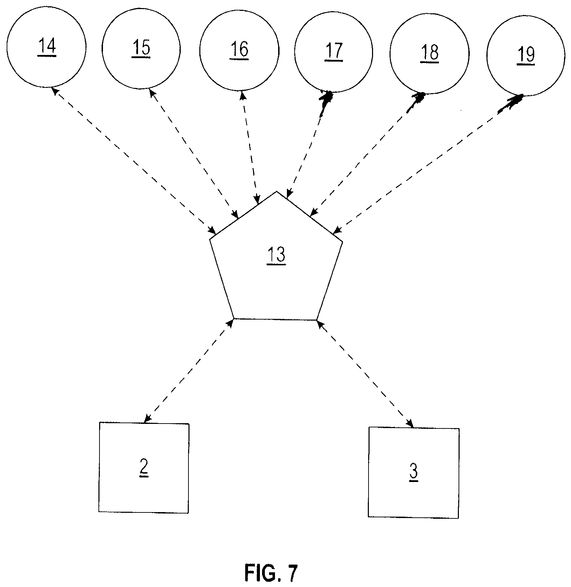

Referring to Figures 6 and 7, a control network for the onboard charger of Example 1 comprises a plurality of controllers 8, 9, 10, 11, 12, and 13. Communication, i.e. exchange of information, and control of certain components of the OBC by certain controllers are illustrated in Figures 6 and 7 by thick dashed lines.

The control network comprises two sub-networks. One sub-network comprises five controllers 8, 9, 10, 11, and 12, whilst the other sub-network comprises an interface controller 13 and a plurality of regulatory inputs 14, 15, 16, 17, 18, and 19 which supply information to the interface controller 13.

The first sub-network comprises a PFC controller 8 for controlling the PFC unit 5a associated with the low frequency AC interface 1 and a DC-DC controller 9 for controlling the DC-DC converter 7. Both of these controllers are configured to communicate with each other to ensure efficient control of the OBC.

The first sub-network additionally comprises a PFC controller 10 for controlling the PFC unit 5b associated with the high frequency AC interface 2. The PFC controller 10 and the DC-DC controller 9 are configured to communicate with each other.

The first sub-network additionally comprises a Charging Point Charge Control Circuit 11 (also referred to as a Charge Pilot Charge Control Circuit 11) and a vehicle control unit 12, both of which are configured to communicate with the PFC controller 8. The vehicle control unit 12 is, in this Example, part of the OBC; however, in other embodiments the vehicle control unit 12 may alternatively be separate to the OBC.

The second sub-network comprises an interface controller 13 for controlling the high frequency AC interface 2 and the DC interface 3. The interface controller 13 is configured to communicate with a plurality of regulatory inputs, as explained in more detail below and with reference to Figure 7.

The interface controller 13 is configured to communicate with an extended controller area network ("CAN") bus 14. The extended CAN bus 14 receives information from non-OBC components of the electric vehicle and provides this information to the interface controller 13.

The interface controller 13 is additionally configured to communicate with an OBC controller area network ("CAN") bus 15. The OBC CAN bus 15 receives information from various components of the OBC and provides this information to the interface controller 13.

The interface controller 13 is additionally configured to communicate with a general-purpose input/output device 16. The device 16 receives information from devices not forming part of the electric vehicle, such as a device forming part of a central assembly of a wireless electric vehicle charging system, and provides this information to the interface controller 13.

The communication pathways between the interface controller 13 and each of the extended CAN bus 14, the OBC CAN bus 15, and the general-purpose input/output device 16 are bidirectional, meaning that the interface controller 13 is able to provide information about the OBC to these buses 14, 15 and device 16. For this reason, communication between these regulatory inputs 14, 15, and 16 and the interface controller 13 is illustrated in Figure 7 using double-headed arrows.

The interface controller 13 is additionally configured to communicate with a high voltage interlock loop 17. The high voltage interlock loop 17 receives information about voltages associated with the circuitry of the electric vehicle and provides this information to the interface controller 13. In particular, the high voltage interlock loop 17 provides information to the interface controller 13 about safety risks associated with excessively high voltages.

The interface controller 13 is additionally configured to communicate with an overcurrent, overvoltage, and overtemperature protection device 18. The device 18 receives information about current, voltages, and temperatures associated with the circuitry of the OBC and provides this information to the interface controller 13. In particular, the device 18 provides information to the interface controller 13 about safety risks associated with excessively high currents, voltages, and temperatures.

The Interface controller 13 is additionally configured to communicate with a system basis chip 19. The chip 19 receives inputs from an automotive electronic control unit (not shown in Figures 6 and 7) and provides information to the interface controller 13, thereby facilitating the provision of inputs from the automotive electronic control unit to the interface controller 13.

The communication pathways between the interface controller 13 and each of the high voltage interlock loop 17, the overcurrent, overvoltage, and overtemperature protection device 18, and the system basis chip 19 are unidirectional, meaning that the interface controller 13 cannot provide information about the OBC to these three components. Thus, these components provide inputs to the interface controller 13 but do not receive any inputs therefrom. For this reason, communication between these regulatory inputs 17, 18, and 19 and the interface controller 13 is illustrated in Figure 7 using single-headed arrows.

The interface controller 13 is configured to integrate all of these inputs. According to a result of the integration, the interface controller 13 communicates with, i.e. sends signals to, and thus controls, the high frequency AC interface 2 and/or the DC interface 3 (as appropriate) to control each of these two interfaces.

This invention thus relates to a method, apparatus, and system for charging electric vehicles via e.g. inductive wireless power transfer (WPT) using the vehicle's Onboard Charger (OBC). It may support a plurality of Ground Assembly (GA) / Vehicle Assembly (VA) charging nodes. It can provide bidirectional power transfer and/or conform to interoperable EV charging standards. The particular system described herein relates to charging of electric vehicles in static systems (e.g. car parks) and/or in dynamic systems (e.g. taxi ranks). The system may or may not use a capacitive cable (also often called a "CTS cable") as the (distribution network) means for transmitting power between a Central Assembly (CA), e.g. a power source such as the grid and a converter that receives power from the power source, and a Ground Assembly (GA), e.g. a ground pad or pads connected to, and supplied with power by, the converter. Furthermore, the system may or may not use a CTS connection in the wires of the inductive coil forming part of the ground pad(s) of the Ground Assembly (GA), and the inductive coil forming part of the car pad within the Vehicle Assembly (VA).

## Claims

1. An onboard charger (OBC) for an electric vehicle, wherein the onboard charger is configured to receive from the grid and externally output to the grid all of:
(a) an alternating current at a low frequency of 50 Hz - 60 Hz, through a low frequency AC interface (1) in a low frequency alternating current mode;
(b) an alternating current at a high frequency of 70 kHz - 95 kHz, through a high frequency AC interface (2) in a high frequency alternating current mode, and
(c) a direct current through a DC interface (3) in a direct current mode,
wherein the OBC comprises a first switch (6a) configured to switch the OBC between the low frequency alternating current mode and either the high frequency alternating current mode or direct current mode, and further comprises a second switch (6b) for switching the OBC between the high frequency alternating current mode and the direct current mode.

2. An OBC as claimed in claim 1, wherein the OBC is configured to output direct current for charging of a battery of the electric vehicle.

3. An OBC as claimed in claims 1 or 2, wherein when in the low frequency alternating current mode the OBC is configured to receive an input alternating current at the low frequency from a plug-in charger.

4. An OBC as claimed in any one of claims 1 to 3, wherein when in the high frequency alternating current mode the OBC is configured to receive an input alternating current at the high frequency from a car pad of the electric vehicle.

5. An OBC as claimed in any one of claims 1 - 4, wherein when in the direct current mode the OBC is configured to receive an input direct current from a plug-in DC charger or an external rectifier.

6. An OBC as claimed in claim 5, wherein the external rectifier is configured to receive an input from a car pad of the electric vehicle or is integral with the car pad.

7. An OBC as claimed in any one of claims 1 to 6, wherein the high frequency alternating current mode and the direct current mode utilise the same downstream components of the OBC connected to the second switch (6b), when either one of the high frequency AC interface (2) or the DC interface (3) is electrically connected to the second switch (6b).

8. An OBC as claimed in any one of claims 1 to 7, wherein the OBC comprises a control network for controlling one or more interfaces of the OBC.

9. An OBC as claimed in claim 8, wherein the control network comprises one or more sub-networks.

10. An OBC as claimed in claim 9, wherein the control network comprises a sub-network for controlling an interface of the OBC associated with the high frequency alternating current mode and for controlling an interface of the OBC associated with the direct current mode.

11. An electric vehicle (EV) comprising an OBC as claimed in any one of claims 1-10, wherein the vehicle is configured to discharge, externally, power from a battery of the electric vehicle.

12. An EV according to claim 11, wherein the OBC comprises or is connected to a rectifier or rectifier component.

13. A system for charging and/or discharging an EV, comprising an EV according to claim 11 or 12 and a power supply for charging a battery of the EV.

14. A system according to claim 13 which additionally comprises a power supply that can both charge/power the EV and accept charge/power from the battery of the EV.

15. A method of adapting an electric vehicle (EV) to discharge AC externally, the method **characterised in that** it comprises fitting the EV with an OBC according to any one of claims 1 - 10.

## Patentansprüche

1. Bordladeeinrichtung (OBC) für ein Elektrofahrzeug, wobei die Bordladeeinrichtung dazu konfiguriert ist, alle von Folgendem von dem Netz aufzunehmen und extern an das Netz auszugeben:
(a) einen Wechselstrom mit einer Niederfrequenz von 50 Hz - 60 Hz durch eine Niederfrequenz-Wechselstromschnittstelle (1) in einem Niederfrequenz-Wechselstrommodus;
(b) einen Wechselstrom mit einer hohen Frequenz von 70 kHz - 95 kHz durch eine Hochfrequenz-Wechselstromschnittstelle (2) in einem Hochfrequenz-Wechselstrommodus und
(c) einen Gleichstrom durch eine Gleichstromschnittstelle (3) in einem Gleichstrommodus, wobei die OBC einen ersten Schalter (6a) umfasst, der dazu konfiguriert ist, die OBC zwischen dem Niederfrequenz-Wechselstrommodus und entweder dem Hochfrequenz-Wechselstrommodus oder dem Gleichstrommodus umzuschalten, und ferner einen zweiten Schalter (6b) zum Umschalten der OBC zwischen dem Hochfrequenz-Wechselstrommodus und dem Gleichstrommodus umfasst.

2. OBC nach Anspruch 1, wobei die OBC dazu konfiguriert ist, Gleichstrom zum Laden einer Batterie des Elektrofahrzeugs auszugeben.

3. OBC nach Anspruch 1 oder 2, wobei die OBC, wenn sie sich im Niederfrequenz-Wechselstrommodus befindet, dazu konfiguriert ist, einen Eingangs-Wechselstrom mit der Niederfrequenz von einer Plug-in-Ladeeinrichtung aufzunehmen.

4. OBC nach einem der Ansprüche 1 bis 3, wobei die OBC, wenn sie sich in dem Hochfrequenz-Wechselstrommodus befindet, dazu konfiguriert ist, einen Eingangswechselstrom mit der hohen Frequenz von einem Car Pad des Elektrofahrzeugs aufzunehmen.

5. OBC nach einem der Ansprüche 1 bis 4, wobei die OBC, wenn sie sich im Gleichstrommodus befindet, dazu konfiguriert ist, einen Eingangsgleichstrom von einer Plug-in-DC-Ladeeinrichtung oder einem externen Gleichrichter aufzunehmen.

6. OBC nach Anspruch 5, wobei der externe Gleichrichter dazu konfiguriert ist, eine Eingabe von einem Car Pad des Elektrofahrzeugs aufzunehmen, oder mit dem Car Pad integriert ist.

7. OBC nach einem der Ansprüche 1 bis 6, wobei der Hochfrequenz-Wechselstrommodus und der Gleichstrommodus die gleichen stromabwärtigen Komponenten der OBC verwenden, die mit dem zweiten Schalter (6b) verbunden sind, wenn entweder eine von der Hochfrequenz-Wechselstromschnittstelle (2) oder der Gleichstromschnittstelle (3) elektrisch mit dem zweiten Schalter (6b) verbunden ist.

8. OBC nach einem der Ansprüche 1 bis 7, wobei die OBC ein Steuerungsnetzwerk zum Steuern einer oder mehrerer Schnittstellen der OBC umfasst.

9. OBC nach Anspruch 8, wobei das Steuerungsnetzwerk ein oder mehrere Subnetzwerke umfasst.

10. OBC nach Anspruch 9, wobei das Steuerungsnetzwerk ein Subnetzwerk zum Steuern einer Schnittstelle der OBC, die dem Hochfrequenz-Wechselstrommodus zugeordnet ist, und zum Steuern einer Schnittstelle der OBC, die dem Gleichstrommodus zugeordnet ist, umfasst.

11. Elektrofahrzeug (EV), umfassend eine OBC nach einem der Ansprüche 1 bis 10, wobei das Fahrzeug dazu konfiguriert ist, Strom von einer Batterie des Elektrofahrzeugs extern zu entladen.

12. EV nach Anspruch 11, wobei die OBC einen Gleichrichter oder eine Gleichrichterkomponente umfasst oder damit verbunden ist.

13. System zum Laden und/oder Entladen eines EV, umfassend ein EV nach Anspruch 11 oder 12 und eine Stromversorgung zum Laden einer Batterie des EV.

14. System nach Anspruch 13, das zusätzlich eine Stromversorgung umfasst, die sowohl das EV aufladen/mit Strom versorgen als auch Ladung/Strom von der Batterie des Elektrofahrzeugs empfangen kann.

15. Verfahren zum Anpassen eines Elektrofahrzeugs (EV), um Wechselstrom extern zu entladen, wobei das Verfahren **dadurch gekennzeichnet ist, dass** es das Ausstatten des EV mit einer OBC nach einem der Ansprüche 1 bis 10 umfasst.

## Revendications

1. Chargeur embarqué (OBC) pour un véhicule électrique, dans lequel le chargeur embarqué est conçu pour recevoir, en provenance du réseau, et délivrer en sortie vers le réseau, de manière externe, l'ensemble des éléments suivants :
(a) un courant alternatif à une basse fréquence de 50 Hz à 60 Hz, au travers d'une interface CA basse fréquence (1) dans un mode de courant alternatif basse fréquence ;
(b) un courant alternatif à une haute fréquence de 70 kHz à 95 kHz, au travers d'une interface CA haute fréquence (2) dans un mode de courant alternatif haute fréquence, et
(c) un courant continu au travers d'une interface CC (3) dans un mode de courant continu,
dans lequel l'OBC comprend un premier commutateur (6a) conçu pour commuter l'OBC entre le mode de courant alternatif basse fréquence et le mode de courant alternatif haute fréquence ou le mode de courant continu, et comprend en outre un second commutateur (6b) pour commuter l'OBC entre le mode de courant alternatif haute fréquence et le mode de courant continu.

2. OBC selon la revendication 1, dans lequel l'OBC est conçu pour délivrer en sortie un courant continu pour charger une batterie du véhicule électrique.

3. OBC selon les revendications 1 ou 2, dans lequel, lorsqu'il est dans le mode de courant alternatif basse fréquence, l'OBC est conçu pour recevoir un courant alternatif d'entrée à la basse fréquence en provenance d'un chargeur enfichable.

4. OBC selon l'une quelconque des revendications 1 à 3, dans lequel, lorsqu'il est en mode de courant alternatif haute fréquence, l'OBC est conçu pour recevoir un courant alternatif d'entrée à la haute fréquence en provenance d'une plaquette de voiture du véhicule électrique.

5. OBC selon l'une quelconque des revendications 1 à 4, dans lequel, lorsqu'il est dans le mode de courant continu, l'OBC est conçu pour recevoir un courant continu d'entrée en provenance d'un chargeur CC enfichable ou d'un redresseur externe.

6. OBC selon la revendication 5, dans lequel le redresseur externe est conçu pour recevoir une entrée en provenance d'une plaquette de voiture du véhicule électrique ou est solidaire de la plaquette de voiture.

7. OBC selon l'une quelconque des revendications 1 à 6, dans lequel le mode de courant alternatif haute fréquence et le mode de courant continu utilisent les mêmes composants en aval de l'OBC connectés au second commutateur (6b), lorsque l'une ou l'autre de l'interface CA haute fréquence (2) ou de l'interface CC (3) est connectée électriquement au second commutateur (6b).

8. OBC selon l'une quelconque des revendications 1 à 7, dans lequel l'OBC comprend un réseau de commande pour commander une ou plusieurs interfaces de l'OBC.

9. OBC selon la revendication 8, dans lequel le réseau de commande comprend un ou plusieurs sous-réseaux.

10. OBC selon la revendication 9, dans lequel le réseau de commande comprend un sous-réseau pour commander une interface de l'OBC associée au mode de courant alternatif haute fréquence et pour commander une interface de l'OBC associée au mode de courant continu.

11. Véhicule électrique (EV) comprenant un OBC selon l'une quelconque des revendications 1 à 10, dans lequel le véhicule est conçu pour décharger, de manière externe, de l'énergie en provenance d'une batterie du véhicule électrique.

12. EV selon la revendication 11, dans lequel l'OBC comprend un composant redresseur ou un redresseur, ou y est connecté.

13. Système pour charger et/ou décharger un EV, comprenant un EV selon la revendication 11 ou 12 et une alimentation électrique pour charger une batterie de l'EV.

14. Système selon la revendication 13, qui comprend de plus une alimentation électrique qui peut à la fois charger/alimenter l'EV et accepter une charge/alimentation en provenance de la batterie de l'EV.

15. Procédé d'adaptation d'un véhicule électrique (EV) pour décharger du courant alternatif de manière externe, le procédé étant **caractérisé en ce qu'**il comprend l'installation, sur l'EV, d'un OBC selon l'une quelconque des revendications 1 à 10.
